# EUROPÄISCHE PATENTSCHRIFT

(11) **EP 0 884 214 B1**
(45) Veröffentlichungstag und Bekanntmachung des Hinweises auf die Patenterteilung: **05.03.2003**
(21) Anmeldenummer: 97109694.6
(22) Anmeldetag: 13.06.1997
(51) Int. Cl.: B60N 2/48, B60R 21/22

(54) **Sitz mit einer Kopfstütze, die ein integriertes Gaskissen einer Airbageinrichtung enthält**
Seat with a headrest including a gas generator for an airbag
Siège avec un appui-tête qui comporte un générateur de gaz pour airbag

(43) Veröffentlichungstag der Anmeldung: 16.12.1998
(73) Patentinhaber: Kendrion RSL Germany GmbH, 57368 Lennestadt (DE)
(72) Erfinder: Schmidt, Reinhard, 57368 Lennestadt (DE)
(74) Vertreter: Nöth, Heinz, Dipl.-Phys.

(56) Entgegenhaltungen:
- DE-A- 2 841 729
- DE-A- 4 218 252
- DE-A- 4 231 523
- DE-A- 19 505 216
- DE-A- 19 614 314
- DE-C- 19 622 662
- DE-U- 9 415 511
- DE-U- 29 601 798
- FR-A- 2 062 306
- US-A- 5 324 071
- US-A- 5 505 487
- US-A- 5 615 909

## Beschreibung

Die Erfindung betrifft einen Fahrzeugsitz mit einer Kopfstütze, die ein integriertes Gaskissen einer Airbageinrichtung enthält, nach dem Oberbegriff des Patentanspruches 1.

Bei einem derartigen aus der DE-A-296 01 798 bekannten Fahrzeugsitz ist eine über den oberen Rand der Rückenlehne des Fahrzeugsitzes sich erstreckende Stützkassette bis etwa in Höhe des Kopfes eines Fahrzeuginsassen vorgesehen. Im Innern der Stützkassette befindet sich ein befüllbares Gaskissen einer Airbageinrichtung, welches durch eine aufreißbare Abdeckung beim Befüllen hindurchtritt und in Richtung zum Kopf des Fahrzeuginsassen hin sich ausdehnt. Ein Gasgenerator, welcher das Füllgas erzeugt, ist in der Rückenlehne des Fahrzeugsitzes angeordnet und über eine Zuleitung mit dem Gaskissen verbunden.

Aus der DE-A-196 14 314 ist ebenfalls ein Fahrzeugsitz mit einer Kopfstütze bekannt, in welcher Gaskissen einer Airbageinrichtung integriert sind, wobei ein diesen Gaskissen zugeordneter Gasgenerator ebenfalls in der Kopfstütze vorgesehen ist.

Aus dem deutschen Gebrauchsmuster DE-GM 94 15 511 ist eine Kopfstütze mit zumindest einem integrierten Gaskissen einer Airbageinrichtung an einem Fahrzeugsitz bekannt, bei der sich das Gaskissen im gefüllten Zustand seitlich vom Kopfbereich einer im Sitz befindlichen Person und im wesentlichen in Vorwärtsfahrtrichtung erstreckt und den Kopf bei einem Unfall somit gegen Verletzung durch seitlichen Aufprall an einer harten Karosseriestruktur schützt. Zum Befüllen des jeweiligen Gaskissens ist in der Kopfstütze ein Gasgenerator angeordnet. Der beim Zünden des Gasgenerators entstehende Zündknall ist jedoch durch diese Anordnung sehr nahe am Ohr der im Sitz befindlichen Person, die dadurch geschädigt werden kann.

Aufgabe der Erfindung ist es, einen Fahrzeugsitz der eingangs genannten Art zu schaffen, bei dem dieses Gefährdungspotential beseitigt und der Aufwand für die Füllgaszuleitung gering ist.

Diese Aufgabe wird erfindungsgemäß durch die kennzeichnenden Merkmale des Patentanspruches 1 gelöst,

Die Kopfstütze ist am Fahrzeugsitz, beispielsweise an einem Kraftfahrzeugsitz, üblicherweise mit zwei Kopfstützstangen befestigt. Die Zuleitung des vom Gasgenerator erzeugten Füllgases erfolgt durch eine Kopfstützstange, die als hohles Rohr ausgebildet ist. Die hohle Kopfstützstange selbst übernimmt die Leitungsfunktion, wobei eine entsprechende Dichtung vorgesehen sein kann. Die Zuleitung enthält ein mit dem Gasgenerator verbundenes Leitungsrohr, in dem oder auf dem die hohle Kopfstützstange längsverschiebbar ist, so dass die Kopfstütze zur Höheneinstellung positionsveränderlich ist.

Vorzugsweise können mehrere Gaskissen in der Kopfstütze integriert sein, wie z. B. zwei seitliche und ein sich nach hinten entfaltendes Gaskissen zum Schutz einer sich auf dem Rücksitz befindenden Person. Diese Gaskissen können über einen Gasgenerator oder über mehrere, den jeweiligen Gaskissen zugeordnete Gasgeneratoren befüllt werden. Die Zuleitung für mehrere Gaskissen kann dann getrennt über die beiden Kopfstützstangen erfolgen.

Die Zuleitung kann auch eine flexible Druckleitung aufweisen, die unterschiedliche Verstellmöglichkeiten der Kopfstütze zulässt wie z. B. auch ein Umkippen der Kopfstützen an Hintersitzen in einem Kraftfahrzeug in eine abgesenkte Stellung, wenn sie nicht benötigt werden. Die flexible Druckleitung kann eine abschnittsweise feste Leitung mit flexiblen Zwischenstücken oder ein flexibler Druckschlauch sein, die zweckmäßigerweise in der Kopfstützstange verläuft und die Bewegung der Kopfstütze (Höhen- und Neigungsanpassung) mitmacht. Die Anordnung der einzelnen Gaskissen erfolgt zweckmäßigerweise in der in der e.g. DE-GM 94 15 511 beschriebenen Weise. Die Sitze können Vorder- oder Rücksitze in Personenkraftfahrzeugen oder Omnibussen oder in beliebigen anderen Fahrzeugen sein. Die Kopfstützen können auch integraler Bestandteil der Sitzlehne sein.

Nachfclgend wird die Erfindung anhand eines Ausführungsbeispiels unter Bezugnahme auf Zeichnungen näher erläutert. Es zeigt:
- Fig. 1: in einer Vorderansicht in schematischer Darstellung einen erfindungsgemäßen Sitz mit Kopfstütze;
- Fig. 2: in einer Ansicht von oben die Kopfstütze mit gefülltem Gaskissen; und
- Fig. 3: in einer perspektivischen Draufsicht die Kopfstütze des erfindungsgemäßen Sitzes.

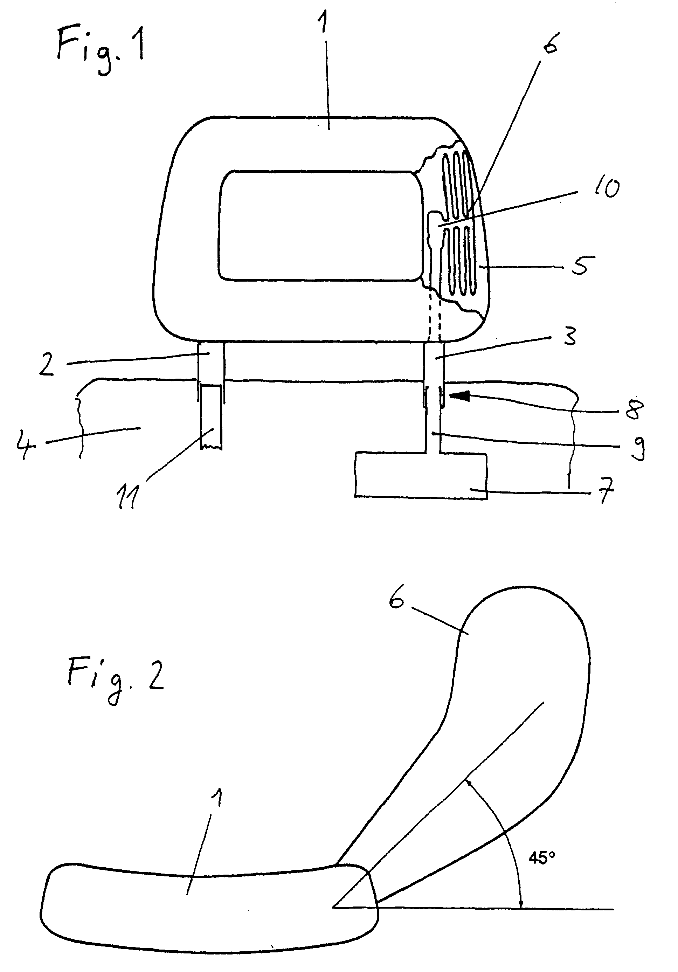

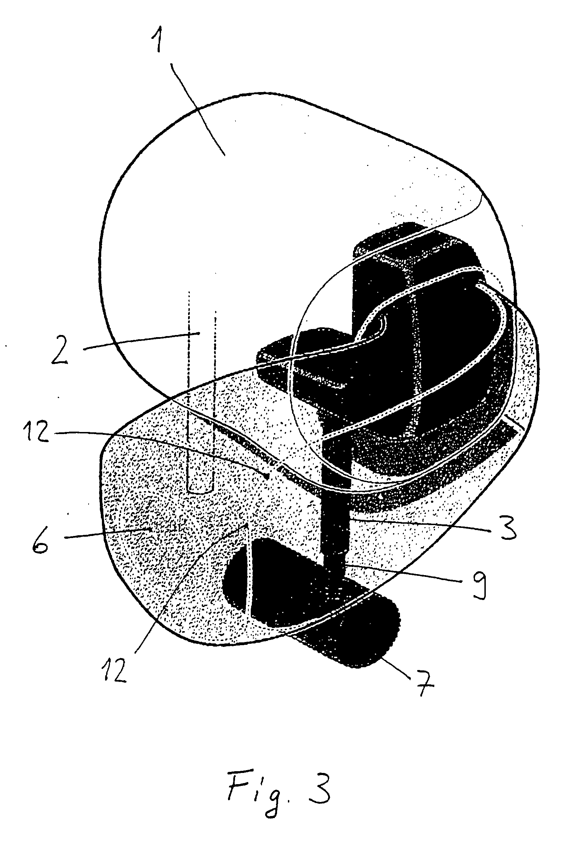

Ein Ausführungsbeispiel des erfindungsgemäßen Sitzes enthält eine Kopfstütze 1, die eine Rahmenkopfstütze (Fig. 1) oder eine volle Kopfstütze (Fig. 3) sein kann und mit zwei Kopfstützstangen 2, 3 an einer Sitzlehne 4 angebracht ist. In einem seitlichen Hohlraum 5 ist ein gefaltetes Gaskissen 6 untergebracht, wie dies schon in der DE-GM 94 15 511 beschrieben ist. Zum Aufblasen des Gaskissens 6 mit Füllgas ist ein Gasgenerator 7 (schematisch in Gestaltung und Positionierung dargestellt) in der Sitzlehne 4 angeordnet. Eine Zuleitung 8 für das Füllgas umfaßt ein Leitungsrohr 9 des Gasgenerators 7, das teilweise innerhalb der hohl ausgebildeten Kopfstützstange 3 angeordnet ist und dieser als Lagerung dient. Auf dem Leitungsrohr 9 kann die Kopfstütze 1 mit der Kopfstützstange 3 zur Höheneinstellung längsverschoben und in Rastpositionen fest arretiert werden. Die Zuleitung 8 führt bis zu einem Gaseintrittsteil 10 des Gaskissens 6.

Das Aufblasen und Entfalten des Gaskissens 6 erfolgt in der Art und Weise, wie in der DE-GM 94 15 511 beschrieben. Das aufgeblasene Gaskissen 6 ist in Fig. 2 und Fig. 3 dargestellt, wobei in Fig. 3 die Formnähte 12 zum Erzeugen der speziellen Gestaltung des aufgeblasenen Gaskissens 6 verdeutlicht sind.

Die andere Kopfstützstange 2, die keine Gaszuleitung aufweist, kann in analoger Weise als hohles Rohr mit einem Lagerstift 11 oder als fester Stab ausgebildet sein, der in einer Führungsbohrung gelagert ist.

## Patentansprüche

1. Fahrzeugsitz mit einer Kopfstütze, die ein integriertes Gaskissen einer Airbageinrichtung enthält, wobei ein Gasgenerator (7) der Airbageinrichtung zum Befüllen des Gaskissens (6) an oder in dem Sitz angeordnet ist und über eine Zuleitung (8) mit dem Gaskissen (6) verbunden ist,
**dadurch gekennzeichnet, dass** die Zuleitung (8) die hohle Kopfstütze (3) und ein mit dem Gasgenerator verbundenes Leitungsrohr (9) umfasst, in dem oder auf dem die hohle Kopfstützenstange (3) zur Höheneinstellung der Kopfstütze (1) teleskopierbar ist.

2. Fahrzeugsitz nach Anspruch 1,
**dadurch gekennzeichnet, dass** mehrere Gaskissen in der Kopfstütze (1) integriert sind, die über mehrere im oder am Sitz angeordnete Gasgeneratoren mit Füllgas aufblasbar sind.

3. Fahrzeugsitz nach Anspruch 1 oder 2,
**dadurch gekennzeichnet, dass** zwei Kopfstützenstangen (2, 3) für die Zuleitung (8) des Füllgases des Gasgenerators (7) vorgesehen sind.

4. Fahrzeugsitz nach einem der Ansprüche 1 bis 3,
**dadurch gekennzeichnet, dass** die Zuleitung (8) eine flexible Druckleitung umfasst.

5. Fahrzeugsitz nach Anspruch 4,
**dadurch gekennzeichnet, dass** die flexible Druckleitung in der Kopfstützenstange (2 oder 3) angeordnet ist.

6. Fahrzeugsitz nach einem der Ansprüche 1 bis 5,
**dadurch gekennzeichnet, dass** das Gaskissen (6) in gefülltem Zustand sich seitlich vom Kopfbereich und im wesentlichen in Vorwärtsrichtung erstreckt.

7. Fahrzeugsitz nach einem der Ansprüche 1 bis 6,
**dadurch gekennzeichnet, dass** zu beiden Seiten des Kopfbereiches sich jeweils ein Gaskissen (6) in gefülltem Zustand erstreckt.

8. Fahrzeugsitz nach einem der Ansprüche 1 bis 7,
**dadurch gekennzeichnet, dass** der bzw. die Gasgeneratoren (7) in einer Lehne (4) des Sitzes angeordnet ist bzw. sind.

## Claims

1. A vehicle seat having a head support which contains an integrated gas cushion of an airbag device, wherein a gas generator (7) of the airbag device for filling the gas cushion (6) is arranged at or in the seat and is connected to the gas cushion (6) by way of a feed conduit (8), **characterised in that** the feed conduit (8) includes the hollow head support (3) and a tube (9) which is connected to the gas generator and in which or on which the hollow head support bar (3) is telescopic for heightwise adjustment of the head support (1).

2. A vehicle seat according to claim 1 **characterised in that** a plurality of gas cushions are integrated in the head support (1) and are inflatable with filling gas by way of a plurality of gas generators arranged in or at the seat.

3. A vehicle seat according to claim 1 or claim 2 **characterised in that** there are provided two head support bars (2, 3) for the feed conduit (8) of the filling gas of the gas generator (7).

4. A vehicle seat according to one of claims 1 to 3 **characterised in that** the feed conduit (8) includes a flexible pressure conduit.

5. A vehicle seat according to claim 4 **characterised in that** the flexible pressure conduit is arranged in the head support bar (2 or 3).

6. A vehicle seat according to one of claims 1 to 5 **characterised in that** in the filled condition the gas cushion (6) extends laterally from the head region and substantially in the forward direction.

7. A vehicle seat according to one of claims 1 to 6 **characterised in that** in the filled condition a respective gas cushion (6) extends at each of the two sides of the head region.

8. A vehicle seat according to one of claims 1 to 7 **characterised in that** the gas generator or generators (7) is or are arranged in a backrest (4) of the seat.

## Revendications

1. Siège de véhicule automobile ayant un appuie-tête qui comporte un coussin intégré de gaz d'un dispositif d'airbag, un générateur (7) de gaz du dispositif d'airbag pour remplir le coussin (6) de gaz disposé sur le siège ou dans le siège et communiquant avec le coussin (6) de gaz par un conduit (8) d'entrée,
**caractérisé en ce que** le conduit (8) d'entrée entoure l'appuie-tête (3) creux et un tuyau (9) de conduite qui communique avec le générateur de gaz et dans lequel ou sur lequel la barre (3) de l'appuie-tête est montée de manière télescopique pour le réglage en hauteur de l'appuie-tête (1).

2. Siège de véhicule automobile suivant la revendication 1,
**caractérisé en ce que** plusieurs coussins de gaz sont intégrés dans l'appuie-tête (1) et peuvent être gonflés par du gaz de remplissage par l'intermédiaire de plusieurs générateurs de gaz disposés dans le siège ou sur le siège.

3. Siège de véhicule automobile suivant la revendication 1, ou 2,
**caractérisé en ce qu'**il est prévu deux barres (2, 3) appuie-tête pour le conduit (8) d'entrée du gaz de remplissage du générateur (7) de gaz.

4. Siège de véhicule automobile suivant l'une des revendications 1 à 3,
**caractérisé en ce que** le conduit (8) d'entrée comprend un conduit souple résistant à la pression.

5. Siège de véhicule automobile suivant la revendication 4,
**caractérisé en ce que** le conduit souple résistant à la pression est disposé dans la barre (2 ou 3) de l'appuie-tête.

6. Siège de véhicule automobile suivant l'une des revendications 1 à 5,
**caractérisé en ce que** le coussin (6) de gaz s'étend, à l'état empli, latéralement à partir de la partie de tête et sensiblement dans la direction avant.

7. Siège de véhicule automobile suivant l'une des revendications 1 à 6,
**caractérisé en ce qu'**un coussin (6) de gaz s'étend respectivement, à l'état empli, de part et d'autre de la partie de tête.

8. Siège de véhicule automobile suivant l'une des revendications 1 à 7,
**caractérisé en ce** le générateur de gaz ou les générateurs (7) de gaz est ou sont disposé(s) dans un dossier (4) du siège.
